# EUROPÄISCHE PATENTSCHRIFT

(11) **EP 3 498 066 B1**
(45) Veröffentlichungstag und Bekanntmachung des Hinweises auf die Patenterteilung: **14.07.2021**
(21) Anmeldenummer: 18195056.9
(22) Anmeldetag: 18.09.2018
(51) Int. Cl.: A01B 71/02, A01B 59/00, A01F 15/00

(54) **FAHRERASSISTENZSYSTEM ZUR ANSTEUERUNG EINES LANDWIRTSCHAFTLICHEN GESPANNS**
DRIVER ASSISTANCE SYSTEM FOR DRIVING AN AGRICULTURAL VEHICLE COMBINATION
SYSTÈME D'AIDE À LA CONDUITE PERMETTANT DE COMMANDER UN ATTELAGE AGRICOLE

(30) Priorität: 15.12.2017 DE 102017130146
(43) Veröffentlichungstag der Anmeldung: 19.06.2019
(73) Patentinhaber: CLAAS Selbstfahrende Erntemaschinen GmbH, 33428 Harsewinkel (DE)
(72) Erfinder: Berger, Arthur, 49143 Bissendorf (DE); Dieckmeyer, Sascha, 49326 Melle (DE); Meyer, Lennart, 52062 Aachen (DE)
(74) Vertreter: CLAAS Gruppe

(56) Entgegenhaltungen:
- DE-A1- 4 239 530
- DE-A1-102011 006 052
- DE-A1-102014 206 233
- DE-A1-102016 118 205

## Beschreibung

Die Erfindung betrifft ein Fahrerassistenzsystem zur Ansteuerung eines landwirtschaftlichen Gespanns gemäß dem Oberbegriff von Anspruch 1 sowie ein landwirtschaftliches Gespann mit einem solchen Fahrerassistenzsystem gemäß Anspruch 13.

Das in Rede stehende landwirtschaftliche Gespann ist mit einer als Traktor ausgestalteten Zugmaschine und mit einem Anbaugerät, das an die Zugmaschine angekoppelt ist, ausgestattet. Dabei kann ein und derselbe Traktor mit den unterschiedlichsten Anbaugeräten kombiniert werden. Bei solchen Anbaugeräten handelt es sich beispielsweise um Mähwerke, Ballenpressen, Schwader, Wender, Bodenbearbeitungsgeräte, Düngerstreuer oder dergleichen.

Aus der DE102016118205A1 ist ein Einstellautomat bekannt, wobei der Einstellautomat sowohl ein Regelwerk zur Optimierung der Arbeitsweise einer Zugmaschine als auch ein Regelwerk zur Optimierung der Arbeitsweise eines Anbaugerätes abarbeitet.

Aus der DE4239530A1 ist eine Steuereinheit bekannt, wobei die Steuereinheit die Drehzahl einer Zapfwelle und die Geschwindigkeit eines Fahrzeugs steuert, wobei mit der Steuereinheit verschaltete Sensoren einem Anbaugerät zugeordnete Istwerte erfassen.

Aus der DE1020142062233A1 ist ein Anbaugerät für einen Traktor bekannt, das zumindest eine Achse mit zumindest einem daran aufgehängten Rad aufweist. Das Rad kann elektrisch angetrieben und eine Position des Rads kann relativ zum Anbaugerät elektrisch oder hydraulisch regelbar sein. Bei einem Gespann mit einem landwirtschaftlichen Nutzfahrzeug und einem derartigen Anbaugerät kann sowohl das Anbaugerät als auch ein Hubwerk des Traktors jeweils von einer eigenen Regeleinrichtung geregelt sein. Die Regeleinrichtungen regeln hierbei basierend auf einem gemeinsamen Sollwert.

Aus der DE102011006052 ist ein Steuersystem für eine Kombination aus einem Traktor und einem gekoppelten Gerät bekannt, wobei das Steuersystem eine Gerätesteuereinheit zum Steuern von Funktionen des Geräts und eine Traktorsteuereinheit umfasst.

Für eine optimale Ansteuerung des Gespanns unter bestimmten Optimierungskriterien ist es bekannt, der Zugmaschine ein Fahrerassistenzsystem zuzuordnen (DE 10 2012 109 210 A1). Bei dem bekannten Fahrerassistenzsystem ist erkannt worden, dass für eine optimierte Ansteuerung des Gespanns die Kenntnis bestimmter Eigenschaften der Zugmaschine einerseits und des Anbaugeräts andererseits unverzichtbar ist. Hierfür wird in der DE 10 2012 109 210 A1 eine Lösung zur Identifizierung des Anbaugeräts vorgeschlagen, auf deren Basis die Ansteuerung des Gespanns insgesamt vorgenommen wird.

Zwar wurde mit dem bekannten Fahrerassistenzsystem ein erster Schritt in Richtung einer optimal aufeinander abgestimmten Ansteuerung von Zugmaschine und Anbaugerät getan. Allerdings entspricht die aufeinander abgestimmte Ansteuerung bei dem bekannten Fahrerassistenzsystem auf der Nutzung fest eingespeicherter Parametersätze. Die Flexibilität des Fahrerassistenzsystems im Hinblick auf die Kombination des Traktors mit geänderten oder gänzlich neuen Anbaugeräten ist damit in steuerungstechnischer Hinsicht eingeschränkt.

Der Erfindung liegt das Problem zugrunde, das bekannte Fahrerassistenzsystem derart auszugestalten und weiterzubilden, dass die Flexibilität hinsichtlich der Zusammenstellung des Gespanns aus Zugmaschine und Anbaugerät bei optimierter Ansteuerung des Gespanns gesteigert wird.

Das obige Problem wird bei einem Fahrerassistenzsystem gemäß dem Oberbegriff von Anspruch 1 durch die Merkmale des kennzeichnenden Teils von Anspruch 1 gelöst.

Zunächst einmal wird davon ausgegangen, dass das Fahrerassistenzsystem Steuerparameter für die Zugmaschine und/oder für das Anbaugerät erzeugt, wobei das Fahrerassistenzsystem eine Ein-/Ausgabeeinheit für den Dialog mit dem Bediener aufweist. Mit "Dialog" ist ganz allgemein zu verstehen, dass sich die Ein-/Ausgabeeinheit einerseits für die Eingabe von Informationen über den Benutzer und für die Ausgabe von Informationen an den Benutzer eignet.

Die erzeugten Steuerparameter werden vorzugsweise an die Maschinensteuerung der Zugmaschine und/oder an die Gerätesteuerung des Anbaugeräts, sofern vorhanden, geleitet. Eine Änderung der Steuerparameter bewirkt dann eine entsprechende Änderung der Maschineneinstellungen und/oder Geräteeinstellungen. Die Änderung der Steuerparameter kann vollautomatisch oder über eine Bedienereingabe vorgesehen sein. Im letztgenannten Fall kann der Bediener beispielsweise über die Ein-/Ausgabeeinheit aufgefordert werden, entsprechende Eingaben vorzunehmen.

Vorschlagsgemäß ist nun erkannt worden, dass der strukturelle Aufbau des Fahrerassistenzsystems als regelbasierte Steuerung neue Möglichkeiten hinsichtlich der oben angesprochenen Flexibilität eröffnet. Ein solches regelbasiertes Steuersystem ist grundsätzlich bekannt. Es weist einen generischen Regelinterpreter auf, der zur Abarbeitung der Regeln eines Regelwerks eingerichtet ist. Die Regeln gehen dabei vorzugsweise auf einfache "Wenn-Dann-Bedingungen" zurück. Zur Abarbeitung des Regelwerks werden dem Regelinterpreter Eingangsparameter zugeführt, auf die der Regelinterpreter die Regeln des Regelwerks anwendet. Das Ergebnis sind Ausgangsparameter, die sich aus den Eingangsparametern einerseits und dem Regelwerk andererseits ergeben. Die Regeln des Regelwerks sind von einem standardisierten Format, so dass gänzlich unbekannte Regeln von dem Regelinterpreter in reproduzierbarer Weise abgearbeitet werden können.

Das vorschlagsgemäße Fahrerassistenzsystem ist mit einem obigen Regelinterpreter ausgestattet, der die Steuerparameter für das Gespann erzeugt, indem er die Regeln eines Regelwerks abarbeitet. Dabei handelt es sich bei dem Regelinterpreter um eine generische Einheit, die unabhängig von der Ausgestaltung von Zugmaschine und Anbaugerät ausgestaltet ist. Das Regelwerk dagegen repräsentiert die zugmaschinenspezifischen und/oder anbaugerätespezifischen Eigenschaften, wie noch erläutert wird.

Vorschlagsgemäß ist nun erkannt worden, dass die Ausgestaltung des Fahrerassistenzsystems als regelbasierte Steuerung eine systematische Flexibilisierung des Gespanns in steuerungstechnischer Hinsicht erlaubt. Im Einzelnen wird vorgeschlagen, dass das Fahrerassistenzsystem ein Verknüpfungsmodul aufweist, das mindestens zwei - unterschiedliche - Regelwerke aus unterschiedlichen Datenquellen empfängt und dass aus den empfangenen Regelwerken nach einer Verknüpfungsvorschrift das vom Regelinterpreter abzuarbeitende Regelwerk erzeugt. Dies ist möglich, da die Regeln der Regelwerke bei einer regelbasierten Steuerung in standardisierter Form vorliegen, so dass eine Verknüpfung der Regeln ohne Weiteres automatisiert, beispielsweise basierend auf bekannten logischen Operatoren, möglich ist. Denkbar ist auch eine unterschiedliche Priorisierung der Regeln unterschiedlicher Datenquellen, wie noch erläutert wird.

Der Begriff "unterschiedliche Datenquelle" ist vorliegend ganz allgemein so zu verstehen, dass die Datenquellen jeweils von einer unterschiedlichen Datenverarbeitungshardware bereitgestellt werden.

In der Praxis lässt sich die vorschlagsgemäße Lösung so vorstellen, dass der Zugmaschine ein erstes Regelwerk zugeordnet ist, das alle Regeln für eine optimierte Ansteuerung der Zugmaschine unter verschiedenen Optimierungskriterien enthält, während dem Anbaugerät ein weiteres Regelwerk zugeordnet ist, das entsprechende Regeln für einen optimierten Betrieb des Anbaugeräts enthält. Die Regeln des Anbaugeräts können die Ansteuerung des Anbaugeräts selbst, aber auch die Ansteuerung der Zugmaschine, insbesondere im Hinblick auf eine Drehzahl oder ein Drehmoment der Zapfwelle der Zugmaschine, betreffen. Der Zugmaschine kann schon im Auslieferungszustand ein Regelwerk zugeordnet sein, das Regeln für verschiedene Anbaugeräte umfasst. Solche, die Anbaugeräte betreffende Regeln sind dann eher generisch gehalten.

Vorschlagsgemäß werden die beiden Regelwerke nach der Verknüpfungsvorschrift derart miteinander verknüpft, dass sich ein resultierendes Regelwerk ergibt, das von dem Regelinterpreter abzuarbeiten ist. Die Verknüpfung kann beispielsweise so vonstatten gehen, dass die Regeln beider Regelwerke in unveränderter Form zu einem resultierenden Regelwerk zusammengeführt werden, soweit dadurch die betriebsnotwendigen Funktionen von Zugmaschine und Anbaugerät nicht beeinträchtigt werden. Dies wäre beispielsweise der Fall, wenn die Abarbeitung einer anbaugerätespezifischen Regel zur Einnahme eines von der Zugmaschine physikalisch nicht darstellbaren Betriebspunkts führen würde. In einem solchen Fall liegen miteinander konkurrierende Regeln zweier Regelwerke vor, die von der Verknüpfungsvorschrift in unterschiedlicher, noch zu erläuternder Weise berücksichtigt werden können.

Mit der vorschlagsgemäßen Lösung ergibt sich die Möglichkeit einer optimierten Ansteuerung des Gespanns, wobei das Gespann auf eine Kombination unterschiedlichster Zugmaschinen mit unterschiedlichsten Anbaugeräten zurückgehen kann. Steuerungstechnisch gesehen ergibt sich mit der vorschlagsgemäßen Lösung für die obige Flexibilität überhaupt keine Beschränkung.

Bei der bevorzugten Ausgestaltung gemäß Anspruch 2 handelt es sich bei den mindestens zwei Regelwerken um ein gespannspezifisches Regelwerk einerseits und um ein anbaugerätespezifisches Regelwerk andererseits, die entsprechend miteinander verknüpft werden. Grundsätzlich kann es auch vorgesehen sein, dass ein gespannspezifisches Regelwerk aus einer Datenquelle empfangen wird, das Regeln für eine optimierte Ansteuerung des Gespanns insgesamt enthält.

Die bevorzugten Ausgestaltungen gemäß den Ansprüchen 3 bis 6 betreffen vorteilhafte Datenquellen für ein zugmaschinenspezifisches Regelwerk, ein anbaugerätespezifisches Regelwerk und ein gespannspezifisches Regelwerk. Dabei kann es gemäß Anspruch 3 vorteilhaft sein, dass das zugmaschinenspezifische Regelwerk und das anbaugerätespezifische Regelwerk jeweils lokal, insbesondere in der Maschinensteuerung bzw. der Gerätesteuerung speicherbar sind. Dies sind einfach umzusetzende Varianten, die im Stand-alone-Betrieb ohne Kommunikationsanbindung nach Extern betreibbar sind.

Alternativ dazu kann es gemäß Anspruch 4 vorgesehen sein, dass ein zugmaschinenspezifisches Regelwerk bzw. ein anbaugerätespezifisches Regelwerk von einer gespannfernen Datenquelle empfangen wird. Beispielsweise kann das betreffende Regelwerk in einem Cloud-basierten Datenverarbeitungssystem gespeichert sein. Dies ermöglicht den weltweiten Austausch entsprechender Regelwerke. Damit ist beispielsweise eine ständige Optimierung eines Regelwerks basierend auf den gewonnenen Praxiserfahrungen möglich, ohne dass er Benutzer hierfür irgendetwas unternehmen muss.

Während die oben angesprochene, rein lokale Speicherung der Regelwerke Gegenstand von Anspruch 5 ist, zeigt Anspruch 6 eine besonders bevorzugte Mischform, bei der das zugmaschinenspezifische Regelwerk von der Maschinensteuerung empfangen wird und das anbaugerätespezifische Regelwerk von einer gespannfernen Datenquelle empfangen wird. Das ist insoweit sachgerecht, als ein Wechsel des Anbaugeräts eher der Praxis entspricht als ein Wechsel der Zugmaschine.

Wie oben angesprochen, wendet der Regelinterpreter die Regeln des abzuarbeitenden Regelwerks auf Eingangsparameter an. Eine Auswahl solcher Eingangsparameter ist Gegenstand der Ansprüche 7 und 8. Demnach können auch die Eingangsparameter aus unterschiedlichen Datenquellen stammen, beispielsweise von einer Sensoranordnung der Zugmaschine und/oder des Anbaugeräts, von der Ein-/Ausgabeeinheit des Fahrerassistenzsystems oder von einer gespannfernen Datenquelle.

Bei der besonders bevorzugten Ausgestaltung gemäß Anspruch 8 handelt es sich bei den Eingangsparametern um vom Benutzer vorgegebene Optimierungskriterien, die vorzugsweise vom Benutzer über die Ein-/Ausgabeeinheit eingegeben werden.

Die vorschlagsgemäße Lösung erlaubt außerdem eine besonders flexible Realisierung des Regelinterpreters, des Verknüpfungsmoduls und der Ein-/Ausgabeeinheit. Gemäß Anspruch 9 können diese Bestandteile zugmaschinenfest, anbaugerätefest oder aber gespannfern realisiert sein. Es ist sogar denkbar, dass mindestens einer dieser Bestandteile auf einem Cloud-basierten Datenverarbeitungssystem läuft bzw. laufen. Diese Flexibilität ergibt sich insbesondere dadurch, dass die standardisierten Regeln der Regelwerke eine unproblematische strukturelle Trennung von Regelinterpreter einerseits und Verknüpfungsmodul andererseits erlauben.

Die weiter bevorzugte Ausgestaltung gemäß dem Anspruch 11 betrifft eine einfach umzusetzende Variante für die Verknüpfungsvorschrift. Die einfachste Variante ist gemäß Anspruch 11 die Aggregation der Regeln der empfangenen Regelwerke miteinander in unveränderter Form.

Nach einer weiteren Lehre gemäß Anspruch 12, der eigenständige Bedeutung zukommt, wird ein landwirtschaftliches Gespann mit einer Zugmaschine und einem Anbaugerät beansprucht. Wesentlich nach dieser weiteren Lehre ist die Ausstattung des Gespanns mit einem Fahrerassistenzsystem gemäß der erstgenannten Lehre. Auf alle Ausführungen zu der erstgenannten Lehre, die geeignet sind, das landwirtschaftliche Gespann insgesamt zu erläutern, darf verwiesen werden.

Im Folgenden wird die Erfindung einer lediglich ein Ausführungsbeispiel darstellenden Zeichnung näher erläutert. In der Zeichnung zeigt:

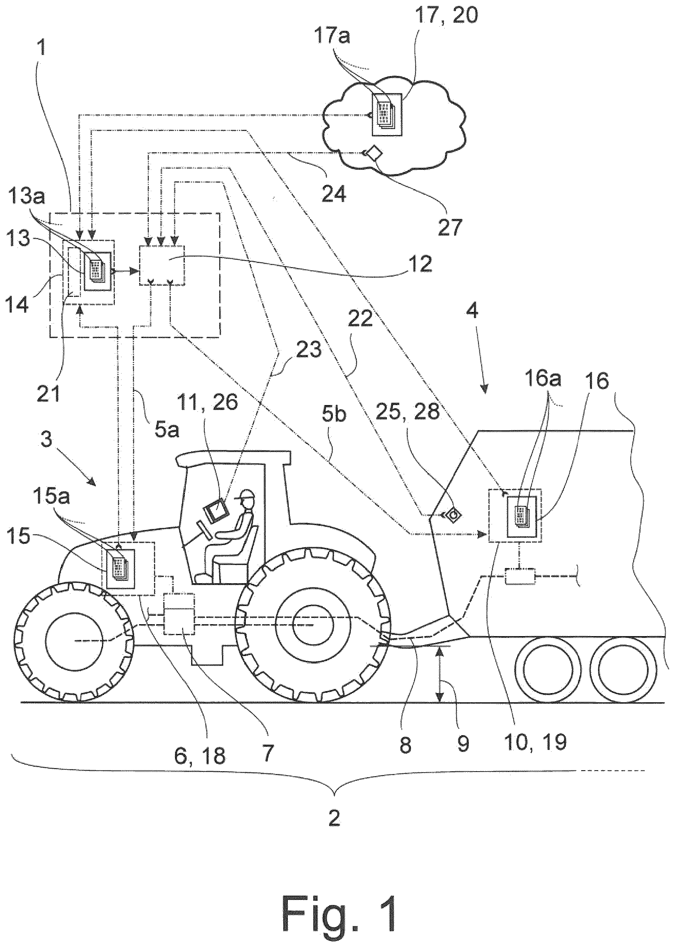

- Fig. 1: ein vorschlagsgemäßes landwirtschaftliches Gespann mit einem vorschlagsgemäßen Fahrerassistenzsystem in der ganz schematischen Darstellung.

Das vorschlagsgemäße Fahrerassistenzsystem 1 dient der Ansteuerung eines landwirtschaftlichen Gespanns 2, das in einer eigenständigen Lehre als solches beansprucht wird.

Das Gespann 2 weist eine als Traktor ausgestaltete Zugmaschine 3 und ein Anbaugerät 4 auf. Bei dem Anbaugerät 4 kann es sich um jedwedes Anbaugerät 4 handeln, das mit einer Zugmaschine 3 koppelbar ist. Bei dem dargestellten Ausführungsbeispiel handelt es sich bei dem Anbaugerät 4 um eine Ballenpresse, mit der sich Heu, Stroh oder dergleichen zu Ballen pressen lässt.

Das vorschlagsgemäße Fahrerassistenzsystem 1 ist dafür eingerichtet, Steuerparameter 5a für die Zugmaschine 3 und Steuerparameter 5b für das Anbaugerät 4 zu erzeugen.

Die dargestellte Zugmaschine 3 weist eine Maschinensteuerung 6 auf, mit der sich Maschineneinstellungen wie die Motordrehzahl des Zugmaschinenmotors 7, die Drehzahl bzw. das Drehmoment der Zapfwelle 8 der Zugmaschine 3, die Heberhöhe 9 eines Heckkrafthebers oder dergleichen verändern lassen. Der Maschinensteuerung 6 werden die von dem Fahrerassistenzsystem 1 erzeugten Steuerparameter 5a zugeführt. Diese Zuführung der Steuerparameter 5a kann vollautomatisch oder über den Bediener, beispielsweise, indem der Bediener die Änderung von Steuerparametern 5a über die Ein-/Ausgabeeinheit 11 freigibt oder über die Ein-/Ausgabeeinheit 11 eingibt, vollzogen werden.

Hier und vorzugsweise ist auch das Anbaugerät 4 mit einer eigenen Steuerung, hier einer Gerätesteuerung 10, ausgestattet, der die vom Fahrerassistenzsystem 1 erzeugten Steuerparameter 5b zugeführt werden.

Das vorschlagsgemäße Fahrerassistenzsystem 1 ist dialogbasiert ausgestaltet. Dies bedeutet, dass das Fahrerassistenzsystem 1 eine Ein-/Ausgabeeinheit 11 für den oben definierten Dialog mit dem Benutzer aufweist.

Das vorschlagsgemäße Fahrerassistenzsystem 1 ist als regelbasiertes Steuersystem ausgestaltet und weist entsprechend einen Regelinterpreter 12 auf, der die obigen Steuerparameter 5a, 5b erzeugt, indem er die Regeln 13a eines Regelwerks 13 abarbeitet.

Das vorschlagsgemäße Fahrerassistenzsystem 1 weist ferner ein Verknüpfungsmodul 14 auf, das mindestens zwei Regelwerke 15-17 aus unterschiedlichen Datenquellen 18-20 empfängt, wobei das Verknüpfungsmodul 14 aus den empfangenen Regelwerken 15-17 und den dazugehörigen Regeln 15a-17a nach einer Verknüpfungsvorschrift 21 das von dem Regelinterpreter 12 abzuarbeitende Regelwerk 13 erzeugt.

Die wesentlichen Vorzüge der vorschlagsgemäßen Lösung wurden im allgemeinen Teil erläutert. Ergänzend darf darauf hingewiesen werden, dass mit der vorschlagsgemäßen Lösung die jeweils lokal in der Zugmaschine 3 bzw. im Anbaugerät 4 vorzuhaltende Rechenleistung und Speichermenge vergleichsweise gering ist. Der Grund hierfür besteht darin, dass durch die regelbasierte Umsetzung des Fahrerassistenzsystems 1 eine Abarbeitung standardisierter Regeln durch den Regelinterpreter 12 vorgesehen ist, so dass auf rechen- und speicherintensive Spezialsoftware verzichtet werden kann.

Weiter darf darauf hingewiesen werden, dass die Art und Weise der Ermittlung, welche Regelwerke dem Verknüpfungsmodul 14 zuzuführen sind, für die vorschlagsgemäße Lösung keine Rolle spielt. Beispielsweise kann ein aus dem Stand der Technik bekanntes Lesesystem für die Erkennung des Anbaugeräts 4 Anwendung finden, um das entsprechende Regelwerk in noch zu erläuternder Weise von der richtigen Datenquelle zu empfangen.

Hier und vorzugsweise ist es vorgesehen, dass das Verknüpfungsmodul 14 ein zugmaschinenspezifisches Regelwerk 15 und ein anbaugerätespezifisches Regelwerk 16 aus den unterschiedlichen Datenquellen 18, 19 empfängt und aus den empfangenen Regelwerken 15, 16 das abzuarbeitende Regelwerk 13 erzeugt.

Bei dem dargestellten Ausführungsbeispiel ist in der Maschinensteuerung 6 ein zugmaschinenspezifisches Regelwerk 15 speicherbar, wobei das Verknüpfungsmodul 14 eingerichtet ist, das zugmaschinenspezifische Regelwerk 15 von der Maschinensteuerung 6 zu empfangen und mit einem weiteren Regelwerk 16 zu verknüpfen. Alternativ oder zusätzlich kann es vorgesehen sein, dass, wie hier, in der Gerätesteuerung 10 ein anbaugerätespezifisches Regelwerk 16 vorhanden ist, wobei das Verknüpfungsmodul 14 eingerichtet ist, das anbaugerätespezifische Regelwerk 16 von der Gerätesteuerung 10 zu empfangen und mit einem weiteren Regelwerk 15 zu verknüpfen. Diese lokale Speicherung der Regelwerke 15, 16 ist insoweit vorteilhaft, als die Regelwerke 15, 16 der Komponente, auf die die Regelwerke 15,16 gerichtet sind, gewissermaßen anhaften.

Eine höhere Flexibilität im Hinblick auf eine eventuelle Änderung des betreffenden Regelwerks 15, 16 lässt sich in einer Alternative dadurch realisieren, dass das Verknüpfungsmodul 14 eingerichtet ist, ein zugmaschinenspezifisches Regelwerk 15 und/oder ein anbaugerätespezifisches Regelwerk 16 und/oder wie hier, ein gespannspezifisches Regelwerk 17 von einer gespannfernen Datenquelle 20, hier einem Cloud-basierten Datenverarbeitungssystem, zu empfangen und mit einem weiteren Regelwerk 15, 16 zu verknüpfen.

Bei dem dargestellten und insoweit bevorzugten Ausführungsbeispiel ist es so, dass das Verknüpfungsmodul 14 das zugmaschinenspezifische Regelwerk 15 von der Maschinensteuerung 6 empfängt und das anbaugerätespezifische Regelwerk 16 von der Gerätesteuerung 10 empfängt. Dabei ist die Maschinensteuerung 6 vorzugsweise fest an der Zugmaschine 3 angeordnet, während die Gerätesteuerung 10 vorzugsweise fest an dem Anbaugerät 4 angeordnet ist.

Eine Mischvariante sieht dagegen vor, dass das Verknüpfungsmodul 15 das zugmaschinenspezifische Regelwerk 15 von der Maschinensteuerung 6 empfängt und das anbaugerätespezifische Regelwerk 16 von einer gespannfernen Datenquelle empfängt.

Es lässt sich der Darstellung gemäß Fig. 1 entnehmen, dass der Regelinterpreter 12 Eingangsparameter 22-24 von einer Datenquelle 25-27, hier und vorzugsweise von unterschiedlichen Datenquellen 25-27, empfängt, wobei der Regelinterpreter 12 die Regeln 13a des abzuarbeitenden Regelwerks 13 auf die empfangenen Eingangsparameter 25-27 anwendet, um die obigen Steuerparameter 5a, 5b zu erzeugen.

In besonders bevorzugter Ausgestaltung ist eine die Eingangsparameter 22 bereitstellende Datenquelle 25 eine Sensoranordnung 28, die Umfeldinformationen für das landwirtschaftliche Gespann 2 sensorisch erfasst. Die Sensoranordnung 28 kann beispielsweise einen Strohfeuchtesensor, einen Luftfeuchtesensor, einen Lufttemperatursensor oder dergleichen umfassen. Als weitere in diesem Zusammenhang anwendbare Arten von Sensoren sind hier optische Sensoren zu nennen, insbesondere bildverarbeitende Sensoren wie laserbasierte Sensoren oder kamerabasierte Sensoren.

Alternativ oder zusätzlich ist eine die Eingangsparameter 23 bereitstellende Datenquelle 26 die Ein-/Ausgabeeinheit 11 des Fahrerassistenzsystems 1. Beispielsweise kann es vorgesehen sein, dass der Benutzer über die Ein-/Ausgabeeinheit 11 bestimmte Umgebungsparameter manuell eingibt.

Weiter alternativ oder zusätzlich kann es vorgesehen sein, dass eine die Eingangsparameter 24 bereitstellende Datenquelle 27 eine gespannferne Datenquelle 20, hier und vorzugsweise zu Schlaginformationen oder Wetterinformationen, ist. Die Schlaginformationen können beispielsweise die Topologie des mit dem Gespann 2 zu bearbeitenden Schlags betreffen, die sich auf die Ansteuerung des Gespanns 2 auswirkt.

Hinsichtlich der beispielsweise über die Ein-/Ausgabeeinheit 11 eingebbaren Eingangsparameter darf noch darauf hingewiesen werden, dass es sich dabei auch um vom Benutzer vorgegebene Optimierungskriterien handeln kann, wobei der Regelinterpreter 12 die Regeln 13a des abzuarbeitenden Regelwerks 13 auf die Erfüllung der Optimierungskriterien hin abarbeitet. Über die Eingangsparameter für den Regelinterpreter 12 lässt sich also gewissermaßen der Fokus der Optimierung variieren.

Interessant bei der vorschlagsgemäßen Lösung ist die Tatsache, dass nicht nur die Regelwerke 15-17 und die Eingangsparameter 22-24 aus ganz unterschiedlichen Datenquellen stammen können, sondern dass der Regelinterpreter 12, das Verknüpfungsmodul 14 und die Ein-/Ausgabeeinheit 11 nahezu beliebig implementierbar sind. In einer ersten Alternative kann zumindest eine dieser Komponenten auf einer zugmaschinenfesten oder anbaugerätefesten Steuerungshardware laufen. Alternativ kann es vorgesehen sein, dass zumindest eine dieser Komponenten auf einer gespannfernen, insbesondere maschinenfernen und/oder gerätefernen Steuerungshardware läuft bzw. laufen.

Sofern vorliegend die Rede von einer gespannfernen Datenquelle bzw. einer gespannfernen Steuerungshardware ist, handelt es sich vorzugsweise ganz allgemein um eine gespannferne Datenverarbeitungshardware, bei der es sich, wie in Fig. 1 angedeutet, weiter vorzugsweise um ein Cloud-basiertes Datenverarbeitungssystem handeln kann. Grundsätzlich kann es sich bei der gespannfernen Datenquelle aber auch um einen von dem Gespann 2 entfernten Datenserver handeln, der über eine Internetverbindung oder dergleichen mit dem Gespann kommuniziert.

Die oben angesprochenen Datenquellen 18-20, 25-27 können also auf verschiedene Weise realisiert sein. Wie oben angesprochen, können die Datenquellen 18-20, 25-27 an der Zugmaschine 3 oder an dem Anbaugerät 4 angeordnet sein. Denkbar ist aber auch, dass die Datenquellen 18-20, 25-27 einer weiteren landwirtschaftlichen Arbeitsmaschine oder einem weiteren landwirtschaftlichen Gespann 2 zugeordnet sind. Denkbar ist weiter, dass die Datenquellen 18-20, 25-27 von einem mobilen Endgerät, insbesondere von einem Smart-Device, wie einem Smartphone bereitgestellt werden. All dies betrifft grundsätzlich auch die dem Regelinterpreter 12, dem Verknüpfungsmodul 14 und der Ein-/Ausgabeeinheit zugeordneten Datenverarbeitungshardware.

Bei den in Fig. 1 dargestellten, strichpunktierten Verbindungen handelt es sich größtenteils um Datenverbindungen. Hier können alle Arten standardisierter Verbindungen Anwendung finden, beispielsweise Isobus, Bluetooth, UMTS, 3G, 4G, 5G, USB, CAN Bus, WiFi, Internet, Ethernet oder dergleichen.

In diesem Zusammenhang darf darauf hingewiesen werden, dass die betreffende Verbindung grundsätzlich auch mit Verschlüsselungsverfahren gegen unberechtigten Zugriff verschlüsselt werden können.

Für die Definition der Verknüpfungsvorschrift 21 ergeben sich zahlreiche vorteilhafte Varianten. Im einfachsten Fall ist es so, dass nach der Verknüpfungsvorschrift 21 die Regeln der von dem Verknüpfungsmodul 14 empfangenen Regelwerke 15-17 unverändert miteinander aggregiert, also zusammengefasst, werden. Alternativ kann es vorgesehen sein, dass die empfangenen Regelwerke 15-17 zu neuen Regeln verarbeitet werden.

Erfindungsgemäß werden bei der Verknüpfung der empfangenen Regelwerke 15-17 nach der Verknüpfungsvorschrift 21 miteinander konkurrierenden Regeln 15a, 16a zweier Regelwerke 15, 16 unterschiedliche Priorisierungen zugeordnet, wobei anschließend die konkurrierenden Regeln 15a, 16a vom Regelinterpreter 12 in Abhängigkeit von der jeweils zugeordneten Priorisierung abgearbeitet werden. Damit lässt sich sicherstellen, dass das Re gelwerk der einen Komponente des Gespanns 2 nicht zu einer Fehlfunktion der anderen Komponente des Gespanns 2 führt.

Nach einer weiteren Lehre, der eigenständige Bedeutung zukommt, wird das landwirtschaftliche Gespann 2 mit einer Zugmaschine 3 und einem Anbaugerät 4 als solches beansprucht. Wesentlich dabei ist, dass das Gespann 2 mit einem vorschlagsgemäßen Fahrerassistenzsystem 1 ausgestattet ist. Auf alle diesbezüglichen Ausführungen darf verwiesen werden.

### Bezugszeichenliste

- 1: Fahrerassistenzsystem
- 2: Gespann
- 3: Zugmaschine
- 4: Anbaugerät
- 5a: Steuerparameter Zugmaschine
- 5b: Steuerparameter Anbaugerät
- 6: Maschinensteuerung
- 7: Zugmaschinenmotor
- 8: Zapfwelle
- 9: Heberhöhe
- 10: Gerätesteuerung
- 11: Ein-/Ausgabeeinheit
- 12: Regel interpreter
- 13: abzuarbeitendes Regelwerk
- 14: Verknüpfungsmodul
- 15-17: Regelwerke
- 18-20: Datenquellen
- 21: Verknüpfungsvorschrift
- 22-24: Eingangsparameter
- 25-27: Datenquellen
- 28: Sensoranordnung

## Patentansprüche

1. Fahrerassistenzsystem zur Ansteuerung eines landwirtschaftlichen Gespanns (2) mit einer als Traktor ausgestalteten Zugmaschine (3) und einem Anbaugerät (4), wobei das Fahrerassistenzsystem (1) derart eingerichtet ist, dass es Steuerparameter (5a, 5b) für die Zugmaschine (3), insbesondere für eine Maschinensteuerung (6) der Zugmaschine (3), und/oder für das Anbaugerät (4), insbesondere für eine Gerätesteuerung (10) des Anbaugerätes (4), erzeugt, wobei das Fahrerassistenzsystem (1) eine Ein-/Ausgabeeinheit (11) für den Dialog mit dem Benutzer aufweist,
wobei das Fahrerassistenzsystem (1) einen Regelinterpreter (12) aufweist, der derart eingerichtet ist, dass er die Steuerparameter (5a, 5b) erzeugt, indem er die Regeln (13a) eines Regelwerks (13) abarbeitet, **dadurch gekennzeichnet, dass** das Fahrerassistenzsystem (1) ein Verknüpfungsmodul (14) aufweist, das dazu eingerichtet ist mindestens zwei Regelwerke (15-17) aus unterschiedlichen Datenquellen (18-20) zu empfangen und aus den empfangenen Regelwerken (15-17) nach einer Verknüpfungsvorschrift (21) das von dem Regelinterpreter (12) abzuarbeitende Regelwerk (13) zu erzeugen, wobei der Zugmaschine (3) ein erstes Regelwerk (15) zugeordnet ist, das alle Regeln für eine optimierte Ansteuerung der Zugmaschine (3) unter verschiedenen Optimierungskriterien enthält, während dem Anbaugerät (4) ein weiteres Regelwerk (16) zugeordnet ist, das entsprechende Regeln für einen optimierten Betrieb des Anbaugeräts (4) enthält, wobei nach der Verknüpfungsvorschrift (21) miteinander konkurrierenden Regeln zweier Regelwerke (15-17) unterschiedliche Priorisierungen zugeordnet werden, und dass der Regelinterpreter (12) derart eingerichtet ist, dass die konkurrierenden Regeln in Abhängigkeit von der zugeordneten Priorisierung abgearbeitet werden.

2. Fahrerassistenzsystem nach Anspruch 1, **dadurch gekennzeichnet, dass** das Verknüpfungsmodul (14) derart eingerichtet ist, dass es ein zugmaschinenspezifisches Regelwerk (15) und ein anbaugerätespezifisches Regelwerk (16) aus den unterschiedlichen Datenquellen (18, 19) empfängt und aus den empfangenen Regelwerken (15, 16) das abzuarbeitende Regelwerk (13) erzeugt.

3. Fahrerassistenzsystem nach einem der vorhergehenden Ansprüche, **dadurch gekennzeichnet, dass** in der Maschinensteuerung (6) ein zugmaschinenspezifisches Regelwerk (15) speicherbar ist und dass das Verknüpfungsmodul (14) eingerichtet ist, das zugmaschinenspezifisches Regelwerk (15) von der Maschinensteuerung (6) zu empfangen und mit einem weiteren Regelwerk (16, 17) zu verknüpfen, und/oder, dass in der Gerätesteuerung (10) ein anbaugerätespezifisches Regelwerk (16) speicherbar ist und dass das Verknüpfungsmodul (14) eingerichtet ist, das anbaugerätespezifische Regelwerk (16) von der Gerätesteuerung (10) zu empfangen und mit einem weiteren Regelwerk (15, 17) zu verknüpfen.

4. Fahrerassistenzsystem nach einem der vorhergehenden Ansprüche, **dadurch gekennzeichnet**, das Verknüpfungsmodul (14) eingerichtet ist, ein zugmaschinenspezifisches Regelwerk (15) und/oder ein anbaugerätespezifisches Regelwerk (16) und/oder ein gespannspezifisches Regelwerk (17) von einer gespannfernen Datenquelle zu empfangen und mit einem weiteren Regelwerk zu verknüpfen.

5. Fahrerassistenzsystem nach einem der vorhergehenden Ansprüche, **dadurch gekennzeichnet, dass** das Verknüpfungsmodul (14) derart eingerichtet ist, dass es das zugmaschinenspezifische Regelwerk (15) von der Maschinensteuerung (6) empfängt und das anbaugerätespezifische Regelwerk (16) von der Gerätesteuerung (10) empfängt.

6. Fahrerassistenzsystem nach einem der vorhergehenden Ansprüche, **dadurch gekennzeichnet, dass** das Verknüpfungsmodul (14) derart eingerichtet ist, dass es das zugmaschinenspezifische Regelwerk (15) von der Maschinensteuerung (6) empfängt und das anbaugerätespezifische Regelwerk (16) von einer gespannfernen Datenquelle empfängt.

7. Fahrerassistenzsystem nach einem der vorhergehenden Ansprüche, **dadurch gekennzeichnet, dass** der Regelinterpreter (12) derart eingerichtet ist, dass er Eingangsparameter (22-24) von einer Datenquelle (25-27), insbesondere von unterschiedlichen Datenquellen (25-27), empfängt, dass der Regelinterpreter (12) die Regeln des abzuarbeitenden Regelwerks (13) auf die empfangenen Eingangsparameter (22-24) anwendet, vorzugsweise, dass eine die Eingangsparameter (22-24) bereitstellende Datenquelle (25) eine Sensoranordnung (28) ist, die Umfeldinformationen für das landwirtschaftliche Gespann (2) sensorisch erfasst, und/oder, dass eine die Eingangsparameter (22-24) bereitstellende Datenquelle (26) die Ein-/Ausgabeeinheit (11) des Fahrerassistenzsystems (1) ist, und/oder, dass eine die Eingangsparameter (22-24) bereitstellende Datenquelle (27) eine gespannferne Datenquelle, insbesondere zu Schlaginformationen oder Wetterinformationen, ist.

8. Fahrerassistenzsystem nach einem der vorhergehenden Ansprüche, **dadurch gekennzeichnet, dass** die Eingangsparameter (23) vom Benutzer vorgegebene Optimierungskriterien sind und dass der Regelinterpreter (12) derart eingerichtet ist, dass er die Regeln (13a) des abzuarbeitenden Regelwerks (13) auf die Erfüllung der Optimierungskriterien hin abarbeitet.

9. Fahrerassistenzsystem nach einem der vorhergehenden Ansprüche, **dadurch gekennzeichnet, dass** der Regelinterpreter (12) und/oder das Verknüpfungsmodul (14) und/oder die Ein-/Ausgabeeinheit (11) derart eingerichtet sind, dass sie auf einer zugmaschinenfesten oder anbaugerätefesten Steuerungshardware läuft bzw. laufen, oder, dass der Regelinterpreter (12) und/oder das Verknüpfungsmodul (14) und/oder die Ein-/Ausgabeeinheit (11) auf einer gespannfernen Steuerungshardware läuft bzw. laufen.

10. Fahrerassistenzsystem nach einem der vorhergehenden Ansprüche, **dadurch gekennzeichnet, dass** die gespannferne Datenquelle und/oder die gespannferne Steuerungshardware eine gespannferne Datenverarbeitungshardware, insbesondere ein Cloud-basiertes Datenverarbeitungssystem, ist.

11. Fahrerassistenzsystem nach einem der vorhergehenden Ansprüche, **dadurch gekennzeichnet, dass** nach der Verknüpfungsvorschrift (21) die Regeln (15a, 16a, 17a) der von dem Verknüpfungsmodul (14) empfangenen Regelwerke (15, 16, 17) unverändert miteinander aggregiert oder zu neuen Regeln verarbeitet werden.

12. Landwirtschaftliches Gespann mit einer Zugmaschine (3) und einem Anbaugerät (4) und mit einem Fahrerassistenzsystem (1) nach einem der vorhergehenden Ansprüche.

## Claims

1. A driver assistance system for controlling an agricultural vehicle combination (2) with a traction engine (3) configured as a tractor and a mounted implement (4), wherein the driver assistance system (1) is configured such that it produces control parameters (5a, 5b) for the traction engine (3), in particular for a machine control system (6) for the traction engine (3), and/or for the mounted implement (4), in particular for an implement control system (10) for the mounted implement (4), wherein the driver assistance system (1) has an input/output unit (11) for dialogue with the user,
wherein the driver assistance system (1) has a rule interpreter (12) which is configured such that it produces the control parameters (5a, 5b) by executing the rules (13a) of a set of rules (13), **characterized in that** the driver assistance system (1) has a linking module (14) which is configured to receive at least two sets of rules (15 - 17) from different data sources (18 - 20) and to produce the set of rules (13) to be executed by the rule interpreter (12) from the received sets of rules (15 - 17) in accordance with a linking specification (21),
wherein a first set of rules (15) is associated with the traction engine (3), which contains all of the rules for an optimized control of the traction engine (3) under different optimization criteria, while a further set of rules (16) is associated with the mounted implement (4), which contains corresponding rules for an optimized operation of the mounted implement (4), wherein competing rules of two sets of rules (15 - 17) are assigned different prioritizations according to the linking specification (21), and **in that** the rule interpreter (12) is configured such that the competing rules are executed as a function of the assigned prioritization.

2. The driver assistance system according to claim 1, **characterized in that** the linking module (14) is configured such that it receives a traction engine-specific set of rules (15) and a mounted implement-specific set of rules (16) from the different data sources (18, 19) and it produces the set of rules (13) to be executed from the received sets of rules (15, 16).

3. The driver assistance system according to one of the preceding claims, **characterized in that** a traction engine-specific set of rules (15) can be stored in the machine control system (6) and **in that** the linking module (14) is configured to receive the traction engine-specific set of rules (15) from the machine control system (6) and to link with a further set of rules (16, 17), and/or **in that** a mounted implement-specific set of rules (16) can be stored in the implement control system (10) and **in that** the linking module (14) is configured to receive the mounted implement-specific set of rules (16) from the implement control system (10) and to link with a further set of rules (15, 17).

4. The driver assistance system according to one of the preceding claims, **characterized in that** the linking module (14) is configured to receive a traction engine-specific set of rules (15) and/or a mounted implement-specific set of rules (16) and/or a vehicle combination-specific set of rules (17) from a data source which is remote from the vehicle combination and to link with a further set of rules.

5. The driver assistance system according to one of the preceding claims, **characterized in that** the linking module (14) is configured such that it receives the traction engine-specific set of rules (15) from the machine control system (6) and receives the mounted implement-specific set of rules (16) from the implement control system (10).

6. The driver assistance system according to one of the preceding claims, **characterized in that** the linking module (14) is configured such that it receives the traction engine-specific set of rules (15) from the machine control system (6) and receives the mounted implement-specific set of rules (16) from a data source which is remote from the vehicle combination.

7. The driver assistance system according to one of the preceding claims, **characterized in that** the rule interpreter (12) is configured such that it receives input parameters (22 - 24) from a data source (25 - 27), in particular from different data sources (25 - 27), **in that** the rule interpreter (12) applies the rules of the set of rules (13) to be executed to the received input parameters (22 - 24), preferably **in that** a data source (25) providing the input parameters (22 - 24) is a sensor assembly (28) which senses environmental information for the agricultural vehicle combination (2), and/or **in that** a data source (26) providing the input parameters (22 - 24) is the input/output unit (11) of the driver assistance system (1), and/or **in that** a data source (27) providing the input parameters (22 - 24) is a data source which is remote from the vehicle combination, in particular for cutting area information or weather information.

8. The driver assistance system according to one of the preceding claims, **characterized in that** the input parameters (23) are optimization criteria specified by the user and **in that** the rule interpreter (12) is configured such that it executes the rules (13a) of the set of rules (13) to be executed in order to meet the optimization criteria.

9. The driver assistance system according to one of the preceding claims, **characterized in that** the rule interpreter (12) and/or the linking module (14) and/or the input/output unit (11) are configured such that it/they runs/run on control hardware which is installed on a traction engine or mounted implement, or **in that** the rule interpreter (12) and/or the linking module (14) and/or the input/output unit (11) runs/run on control hardware which is remote from the vehicle combination.

10. The driver assistance system according to one of the preceding claims, **characterized in that** the data source which is remote from the vehicle combination and/or the control hardware which is remote from the vehicle combination is data processing hardware which is remote from the vehicle combination, in particular a Cloud-based data processing system.

11. The driver assistance system according to one of the preceding claims, **characterized in that** according to the linking specification (21), the rules (15a, 16a, 17a) of the sets of rules (15, 16, 17) received from the linking module (14) are aggregated with one another unchanged or are processed into new rules.

12. An agricultural vehicle combination with a traction engine (3) and a mounted implement (4) and with a driver assistance system (1) according to one of the preceding claims.

## Revendications

1. Système d'assistance à la conduite pour commander un attelage agricole (2) comprenant une machine de traction (3) conformée en tracteur et un outil rapporté (4), le système d'assistance à la conduite (1) étant agencé de façon à générer des paramètres de commande (5a, 5b) pour la machine de traction (3), en particulier pour une commande de machine (6) de la machine de traction (3), et/ou pour l'outil rapporté (4), en particulier pour une commande d'outil (10) de l'outil rapporté (4), le système d'assistance à la conduite (1) comportant une unité d'entrée/sortie (11) pour le dialogue avec l'utilisateur, le système d'assistance à la conduite (1) comportant un interpréteur de règles (12) qui est agencé de façon à générer les paramètres de commande (5a, 5b) en exécutant les règles (13a) d'un ensemble de règles (13), **caractérisé en ce que** le système d'assistance à la conduite (1) comporte un module de liaison (14) qui est agencé pour recevoir au moins deux ensembles de règles (15-17) provenant de différentes sources de données (18-20) et pour générer l'ensemble de règles (13) à exécuter par l'interpréteur de règles (12) à partir des ensembles de règles reçus (15-17) selon une consigne de liaison (21), à la machine de traction (3) étant associé un premier ensemble de règles (15) qui contient toutes les règles pour une commande optimisée de la machine de traction (3) selon divers critères d'optimisation, tandis qu'à l'outil rapporté (4) est associé un autre ensemble de règles (16) qui contient des règles correspondantes pour un fonctionnement optimisé de l'outil rapporté (4), des priorisations différentes étant associées à des règles de deux ensembles de règles (15-17) concurrentes entre elles selon la consigne de liaison (21), et **en ce que** l'interpréteur de règles (12) est agencé de façon que les règles concurrentes soient exécutées en fonction de la priorisation associée.

2. Système d'assistance à la conduite selon la revendication 1, **caractérisé en ce que** le module de liaison (14) est agencé de façon à recevoir un ensemble de règles spécifique à la machine de traction (15) et un ensemble de règles spécifique à l'outil rapporté (16) provenant des différentes sources de données (18, 19) et à générer l'ensemble de règles à exécuter (13) à partir des ensembles de règles reçus (15, 16).

3. Système d'assistance à la conduite selon une des revendications précédentes, **caractérisé en ce que** dans la commande de machine (6) est mémorisable un ensemble de règles spécifique à la machine de traction (15), et **en ce que** le module de liaison (14) est agencé pour recevoir de la commande de machine (6) l'ensemble de règles spécifique à la machine de traction (15) et pour le relier à un autre ensemble de règles (16, 17), et/ou **en ce que** dans la commande d'outil (10) est mémorisable un ensemble de règles spécifique à l'outil rapporté (16) et **en ce que** le module de liaison (14) est agencé pour recevoir de la commande d'outil (10) l'ensemble de règles spécifique à l'outil rapporté (16) et pour le relier à un autre ensemble de règles (15, 17).

4. Système d'assistance à la conduite selon une des revendications précédentes, **caractérisé en ce que** le module de liaison (14) est agencé pour recevoir d'une source de données distante de l'attelage un ensemble de règles spécifique à la machine de traction (15) et/ou un ensemble de règles spécifique à l'outil rapporté (16) et/ou un ensemble de règles spécifique à l'attelage (17) et pour les relier à un autre ensemble de règles.

5. Système d'assistance à la conduite selon une des revendications précédentes, **caractérisé en ce que** le module de liaison (14) est agencé de façon à recevoir de la commande de machine (6) l'ensemble de règles spécifique à la machine de traction (15) et de façon à recevoir de la commande d'outil (10) l'ensemble de règles spécifique à l'outil rapporté (16).

6. Système d'assistance à la conduite selon une des revendications précédentes, **caractérisé en ce que** le module de liaison (14) est agencé de façon à recevoir de la commande de machine (6) l'ensemble de règles spécifique à la machine de traction (15) et de façon à recevoir de la source de données distante de l'attelage l'ensemble de règles spécifique à l'outil rapporté (16) .

7. Système d'assistance à la conduite selon une des revendications précédentes, **caractérisé en ce que** l'interpréteur de règles (12) est agencé de façon à recevoir des paramètres d'entrée (22-24) d'une source de données (25-27), en particulier de différentes sources de données (25-27), **en ce que** l'interpréteur de règles (12) applique les règles de l'ensemble de règles à exécuter (13) aux paramètres d'entrée reçus (22-24), de préférence **en ce qu'**une source de données (25) fournissant les paramètres d'entrée (22-24) est un agencement de capteurs (28) qui détecte au moyen de capteurs les informations d'environnement pour l'attelage agricole (2), et/ou **en ce qu'**une source de données (26) fournissant les paramètres d'entrée (22-24) est l'unité d'entrée/sortie (11) du système d'assistance à la conduite (1), et/ou **en ce qu'**une source de données (27) fournissant les paramètres d'entrée (22-24) est une source de données distante de l'attelage, en particulier relatives à des informations sur la parcelle ou à des informations météorologiques.

8. Système d'assistance à la conduite selon une des revendications précédentes, **caractérisé en ce que** les paramètres d'entrée (23) sont des critères d'optimisation prescrits par l'utilisateur, et **en ce que** l'interpréteur de règles (12) est agencé de façon à exécuter les règles (13a) de l'ensemble de règles à exécuter (13) dans le but de remplir les critères d'optimisation.

9. Système d'assistance à la conduite selon une des revendications précédentes, **caractérisé en ce que** l'interpréteur de règles (12) et/ou le module de liaison (14) et/ou l'unité d'entrée/sortie (11) sont agencés de façon à fonctionner sur un matériel de commande solidaire de la machine de traction ou solidaire de l'outil rapporté, ou de façon que l'interpréteur de règles (12) et/ou le module de liaison (14) et/ou l'unité d'entrée/sortie (11) fonctionnent sur un matériel de commande distant de l'attelage.

10. Système d'assistance à la conduite selon une des revendications précédentes, **caractérisé en ce que** la source de données distante de l'attelage et/ou le matériel de commande distant de l'attelage est un matériel informatique distant de l'attelage, en particulier un système informatique basé sur le Cloud.

11. Système d'assistance à la conduite selon une des revendications précédentes, **caractérisé en ce que**, selon la consigne de liaison (21), les règles (15a, 16a, 17a) des ensembles de règles (15, 16, 17) reçus par le module de liaison (14) sont agrégées entre elles sans être modifiées ou sont transformées en nouvelles règles.

12. Attelage agricole comprenant une machine de traction (3) et un outil rapporté (4) et comprenant un système d'assistance à la conduite (1) selon une des revendications précédentes.
